# EUROPÄISCHE PATENTSCHRIFT

(11) **EP 2 921 787 B1**
(45) Veröffentlichungstag und Bekanntmachung des Hinweises auf die Patenterteilung: **27.11.2019**
(21) Anmeldenummer: 14160975.0
(22) Anmeldetag: 20.03.2014
(51) Int. Cl.: F24D 3/14, E04C 1/39, F28D 7/12, F28D 21/00, E04B 2/02

(54) **Temperierungsmodul für eine Gebäudewand**
Tempering module for a building wall
Module de régulation de température pour une paroi de bâtiment

(43) Veröffentlichungstag der Anmeldung: 23.09.2015
(73) Patentinhaber: Ahlf, Günter, 25348 Glückstadt (DE)
(72) Erfinder: Ahlf, Günter, 25348 Glückstadt (DE)
(74) Vertreter: Glawe, Delfs, Moll

(56) Entgegenhaltungen:
- EP-A2- 1 001 234
- EP-A2- 1 911 899
- EP-A2- 2 218 970
- DE-A1- 2 109 049
- DE-A1-102008 060 068
- DE-U1- 29 800 706
- FR-A1- 2 928 671
- US-A- 4 565 043

## Beschreibung

Die Erfindung betrifft ein Temperierungsmodul für eine Gebäudewand. Das Temperierungsmodul umfasst einen ersten Einsteckabschnitt und einen sich parallel dazu erstreckenden zweiten Einsteckabschnitt. Der erste Einsteckabschnitt und der zweite Einsteckabschnitt erstrecken sich jeweils von einem Versorgungsende bis zu einem Stirnende. Der erste Einsteckabschnitt und der zweite Einsteckabschnitt haben jeweils einen Vorlaufkanal und einen Rücklaufkanal, die nahe dem Stirnende miteinander verbunden sind. Zwischen dem ersten Einsteckabschnitt und dem zweiten Einsteckabschnitt erstreckt sich ein Verbindungsabschnitt.

Solche Temperierungsmodule können dazu verwendet werden, einen an die Gebäudewand angrenzenden Raum des Gebäudes auf eine gewünschte Temperatur zu bringen. Es wird dazu eine Temperierflüssigkeit mit geeigneter Temperatur durch das Temperierungsmodul geleitet. Die Temperatur der Temperierflüssigkeit überträgt sich über die Gebäudewand auf den Raum. Weitere Heiz- oder Kühleinrichtungen für den Raum sind nicht erforderlich.

Beschrieben sind derartige Temperierungsmodule beispielsweise in EP 2 218 970 A2 und EP 2 218 971 A2. Die Einsteckabschnitte werden von oben in passende Kanäle der Gebäudewand eingeführt, so dass der Verbindungsabschnitt zwischen zwei Einsteckabschnitten oben auf der Gebäudewand aufliegt. Anschließend kann die Wand vervollständigt werden, so dass auch der Verbindungsabschnitt im Inneren der Wand aufgenommen ist. Bei den bekannten Temperierungsmodulen umfasst der Verbindungsabschnitt zwei parallel zueinander angeordnete Rohre, von denen eines für den Vorlauf und das andere für den Rücklauf der Temperierflüssigkeit bestimmt ist. Nachteilig bei dieser Gestaltung ist, dass die übereinander liegenden Rohre des Verbindungsabschnitts eine beträchtliche Bauhöhe innerhalb der Gebäudewand beanspruchen und dass die Installation des Temperierungsmoduls deswegen einigen Aufwand erfordert. Dokument EP 1 001 234 A2 offenbart ein Temperierungsmodul gemäß des Oberbegriffs des Anspruchs 1.

Der Erfindung liegt die Aufgabe zu Grunde, ein Temperierungsmodul vorzustellen, das mit geringerem Aufwand in einer Gebäudewand installiert werden kann. Ausgehend vom genannten Stand der Technik wird die Aufgabe gelöst mit den Merkmalen des unabhängigen Anspruchs. Vorteilhafte Ausführungsformen sind in den Unteransprüchen angegeben. Erfindungsgemäß verbindet der Verbindungsabschnitt den Rücklaufkanal des ersten Einsteckabschnitts mit dem Vorlaufkanal des zweiten Einsteckabschnitts.

Indem die beiden Einsteckabschnitte parallel zueinander ausgerichtet sind, ist es möglich, die Einsteckabschnitte mit den Stirnenden voran in parallele Wandkanäle in der Gebäudewand einzuführen. Jeder Einsteckabschnitt umfasst einen Vorlaufkanal und einen Rücklaufkanal, wobei die Temperierflüssigkeit im Vorlaufkanal vom Versorgungsende in Richtung Stirnende fließt und im Rücklaufkanal vom Stirnende in Richtung Versorgungsende fließt. Sowohl der Vorlauf als auch der Rücklauf der Temperierflüssigkeit findet also in dem Einsteckabschnitt statt, so dass es ausreicht, dass die Kanäle in der Gebäudewand von einem Ende aus zugänglich sind.

Nahe dem Versorgungsende sollte es keine Verbindung zwischen dem Vorlaufkanal und dem Rücklaufkanal geben, so dass die gesamte Temperierflüssigkeit den Weg über das Stirnende des Einsteckabschnitts nimmt. Durch die nahe dem Stirnende angeordnete Verbindung zwischen dem Vorlaufkanal und dem Rücklaufkanal kehrt sich die Flussrichtung der Temperierflüssigkeit um. Über das Stirnende hinaus kann sich die Temperierflüssigkeit nicht bewegen.

Indem erfindungsgemäß der Rücklaufkanal des ersten Einsteckabschnitts mit dem Vorlaufkanal des zweiten Einsteckabschnitts verbunden ist, gibt es lediglich einen einzigen Verbindungskanal zwischen den beiden Einsteckabschnitten. Die Installation des Temperierungsmoduls in der Gebäudewand vereinfacht sich, weil ein solcher einfacher Verbindungsabschnitt nur wenig Raum einnimmt.

Erfindungsgemäß stimmt der Durchmesser des Verbindungsabschnitts mit dem Durchmesser des Einsteckabschnitts überein.

Für die Herstellung des Temperierungsmoduls ist es günstig, wenn der Vorlaufkanal und der Rücklaufkanal in dem Einsteckabschnitt nebeneinander angeordnet sind. Beispielsweise können der Vorlaufkanal und der Rücklaufkanal im Querschnitt betrachtet jeweils halbkreisförmig sein und so nebeneinander angeordnet sein, dass der Querschnitt des Einsteckabschnitts im Wesentlichen kreisförmig ist. Es ist von Vorteil, wenn die Einsteckabschnitte im Querschnitt an eine kreisförmige Kontur angepasst sind, da die in einer Gebäudewand vorgesehenen vertikalen Wandkanäle im Querschnitt gesehen regelmäßig kreisförmig sind.

Der Vorlaufkanal und der Rücklaufkanal können von einer durchgehenden Außenwand umgeben sein. Die durchgehende Außenwand kann im Querschnitt kreisförmig sein. Die Trennung zwischen dem Vorlaufkanal und dem Rücklaufkanal kann sich aus einer im Inneren der Außenwand angeordneten Trennwand ergeben. Die Trennwand ist vorzugsweise so gestaltet, dass der Vorlaufkanal und der Rücklaufkanal am Versorgungsende vollständig voneinander getrennt sind. Am anderen Ende kann die Trennwand mit einem Abstand zu der Stirnwand enden. Durch den Abstand wird die Verbindung zwischen dem Vorlaufkanal und dem Rücklaufkanal gebildet, durch den die Temperierflüssigkeit hindurchtreten kann.

Der Verbindungsabschnitt kann rohrförmig gestaltet sein. Der größte Außendurchmesser des Verbindungsabschnitts kann beispielsweise zwischen 1,5 cm und 5 cm liegen. Der Durchmesser des Verbindungsabschnitts stimmt mit dem Durchmesser des Einsteckabschnitts überein. Vorzugsweise bildet das obere Ende des Verbindungsabschnitts zugleich einen oberen Abschluss des Temperierungsmoduls. Es ragt also kein Teil des Einsteckabschnitts nach oben über den Verbindungsabschnitt hinaus.

Für den Einsteckabschnitt ist vorzugsweise eine Wandung aus einem Kunststoffmaterial vorgesehen. Das Kunststoffmaterial sollte eine ausreichende Diffusionsdichtigkeit aufweisen, wie Sie beispielsweise bei Polypropylen oder Polyethylen gegeben ist. Es ist ferner von Vorteil, wenn das Kunststoffmaterial ein Thermoplast ist. Thermoplastische Materialien sind schweißbar, so dass das Temperierungsmodul repariert werden kann, falls es beispielsweise versehentlich angebohrt wurde. In einer bevorzugten Ausführungsform sind die Einsteckabschnitte und die Verbindungsabschnitte aus einem einheitlichen Kunststoffmaterial gefertigt.

Das erfindungsgemäße Temperierungsmodul kann mehr als zwei Einsteckabschnitte, weiter bevorzugt mindestens vier Einsteckabschnitte umfassen. Jeweils zwischen zwei benachbarten Einsteckabschnitten kann sich ein Verbindungsabschnitt erstrecken. Die Verbindungsabschnitte können entlang einer gemeinsamen Achse ausgerichtet sein. Alle Einsteckabschnitte können parallel zueinander angeordnet sein. Die Achsen aller Einsteckabschnitte können in einer Ebene liegen.

Das Temperierungsmodul kann Einsteckabschnitte umfassen, die zu zwei Seiten hin einen benachbarten Einsteckabschnitt haben. Das Ende des Temperierungsmoduls wird zu beiden Seiten hin von einem äußeren Einsteckabschnitt gebildet, der nur auf einer Seite einen benachbarten Einsteckabschnitt hat. Vorzugweise sind die äußeren Einsteckabschnitte jeweils mit einem Anschluss für eine Versorgungsleitung versehen. Über einen der Anschlüsse wird die Temperierflüssigkeit zugeführt, über den anderen Anschluss wird die Temperierflüssigkeit von dem Temperierungsmodul abgeführt.

Die Erfindung betrifft außerdem eine Gebäudewand, in deren Innerem die Einsteckabschnitte eines solchen Temperierungsmoduls angeordnet sind. In einer bevorzugten Ausführungsform sind sowohl die Einsteckabschnitte als auch die Verbindungsabschnitte im Inneren der Gebäudewand aufgenommen. Zusätzlich können auch die Versorgungsleitungen im Inneren der Wand angeordnet sein, zwingend erforderlich ist dies jedoch nicht. Möglich ist, dass ein Abschnitt der Gebäudewand, in dem das Temperierungsmodul angeordnet ist, zugleich einen Übergangsbereich zur einen Decke bildet, also in derselben Ebene angeordnet ist wie die Decke. Insbesondere ist möglich, dass die Verbindungsabschnitte in einem solchen Übergangsbereich angeordnet sind.

Die Gebäudewand umfasst vorzugsweise eine Mehrzahl von Bausteinen. Die Bausteine können einen vertikalen Durchgangskanal aufweisen, wobei die Bausteine vorzugsweise so angeordnet sind, dass die Durchgangskanäle übereinander angeordneter Bausteine miteinander fluchten. Der aus mehreren Durchgangskanälen zusammengefügte Wandkanal erstreckt sich vorzugsweise durch mindestens zwei Bausteine, weiter vorzugsweise durch mindestens drei Bausteine, weiter vorzugsweise durch mindestens vier Bausteine. Die Gebäudewand umfasst eine Mehrzahl solcher Wandkanäle, die parallel zueinander ausgerichtet sind und deren Abstand dem Abstand der Einsteckabschnitte des Temperierungsmoduls entspricht.

Nachdem die Gebäudewand aus den Bausteinen so weit aufgebaut ist, können die Einsteckabschnitte des Temperierungsmoduls mit den Stirnenden voran in die Wandkanäle eingeführt werden. Die Wandkanäle sind vorzugsweise mindestens so lang wie die Einsteckabschnitte, so dass die Einsteckabschnitte vollständig in den Wandkanälen aufgenommen werden können. Die Verbindungsabschnitte können auf der obersten Reihe von Bausteinen aufliegen. Der Durchmesser der Wandkanäle ist vorzugsweise größer als der Durchmesser der Einsteckabschnitte, so dass die Einsteckabschnitte leicht eingeführt werden können. Der Ringspalt zwischen Einsteckabschnitt und Wandkanal kann mit einem wärmeleitenden Material aufgefüllt werden, um eine gute Wärmeübertragung von dem Temperierungsmodul auf das Material der Gebäudewand zu erreichen. Um den Ringspalt leicht auffüllen zu können, kann ein pulverförmiges Material verwendet werden, beispielsweise Quarzsand. Die Spaltweite des Ringspalts kann beispielsweise zwischen 0,2 cm und 4 cm, vorzugsweise zwischen 0,5 cm und 2 cm liegen.

Nach dem Einführen der Einsteckabschnitte in die Wandkanäle kann die Gebäudewand vervollständigt werden, um auch die Verbindungsabschnitte in die Gebäudewand aufzunehmen. Dies kann beispielsweise geschehen, indem die Verbindungsabschnitte mit einem geeigneten Material vergossen werden. Dieser Teil der Gebäudewand besteht dann nicht aus Bausteinen, sondern aus einem aushärtenden Material wie beispielsweise Beton.

In einer bevorzugten Ausführungsform der erfindungsgemäßen Gebäudewand ist ein Baustein vorgesehen, dessen horizontale Abschlussfläche mit einer Rinne versehen ist, die sich beim bestimmungsgemäßen Einsatz des Bausteins waagerecht in der Ebene der Wand erstreckt. Die Ebene der Wand entspricht regelmäßig der Ebene der größten Flächenausdehnung des Bausteins. In dieser Rinne kann der Verbindungsabschnitt des Temperierungsmoduls ganz oder teilweise aufgenommen werden. Dadurch wird es möglich, die Gebäudewand auch im Bereich der Verbindungsabschnitte mit Bausteinen zu vervollständigen. Mehr als eine normale Mörtelfuge ist zwischen den übereinander angeordneten Steinen nicht erforderlich. Der in diesem Abschnitt beschriebene Baustein bildet eine eigenständige Erfindung. Der Baustein kann mit weiteren Merkmalen fortgebildet werden, die im Zusammenhang der Gebäudewand oder der Bausteine der Gebäudewand beschrieben sind.

Die Rinne erstreckt sich vorzugweise über die gesamte Breite des Bausteins. Dadurch wird es möglich, aus mehreren nebeneinander angeordneten Bausteinen eine Rinne von größerer Länge zusammenzusetzen. Die Breite der Rinne ist so bemessen, dass der Verbindungsabschnitt des Temperierungsmoduls in der Rinne aufgenommen werden kann. Die Breite der Rinne kann beispielsweise zwischen 2 cm und 8 cm, vorzugsweise zwischen 3 cm und 6 cm liegen. Die Tiefe der Rinne kann so bemessen sein, dass der Verbindungsabschnitt des Temperierungsmoduls nur teilweise aufgenommen werden kann. Der über die Kontur des Bausteins herausragende Teil des Verbindungsabschnitts kann dann in einer Rinne aufgenommen werden, die in einer unteren horizontalen Abschlussfläche des darüber angeordneten Bausteins ausgebildet ist. Umfasst sind auch Ausführungsformen, bei denen die Rinne den Verbindungsabschnitt insgesamt aufnimmt. Die Tiefe der Rinne kann beispielsweise zwischen 2 cm und 8 cm, vorzugweise zwischen 3 cm und 6 cm liegen. Sind die Verbindungsabschnitte insgesamt in der Rinne aufgenommen, so bestehen mehr Möglichkeiten, den Bau nach oben hin fortzusetzen. Beispielsweise ist es möglich, direkt eine Spannbetondecke aufzulegen.

Der Baustein umfasst vorzugsweise eine Mehrzahl von vertikalen Durchgangskanälen. Die Rinne des Bausteins ist vorzugsweise der Ebene angeordnet, die von den Durchgangskanälen des Bausteins aufgespannt wird. Die Durchgangskanäle können über die Breite des Bausteins gleichverteilt sein. Die Durchgangskanäle können beispielsweise einen Abstand von 12,5 cm oder 25 cm zueinander haben. Die Abstandsangaben bei den Kanälen und den Einsteckabschnitten beziehen sich auf den Abstand zwischen den Achsen.

In einer horizontalen Abschlussfläche des Bausteins kann ein Positionierelement vorgesehen sein, das dazu ausgelegt ist, mit einer horizontalen Abschlussfläche eines darüber oder darunter angeordneten Bausteins eine bestimmte Ausrichtung der Bausteine relativ zueinander zu definieren. In der bestimmten Ausrichtung können die Bausteine horizontal zueinander versetzt sein, so dass die Fuge zwischen zwei Bausteinen jeweils von einem darüber angeordneten Baustein überdeckt ist. Mithilfe der Positionierelemente können die Bausteine zuverlässig so zusammengesetzt werden, dass die Durchgangskanäle der übereinander angeordneten Bausteine miteinander fluchten. Das Positionierelement kann beispielsweise ein Stift sein, der gegenüber der horizontalen Abschlussfläche vorspringt und der dazu ausgelegt ist, in eine Vertiefung eines darüber oder darunter angeordneten Bausteins einzugreifen. Vorzugsweise umfasst der Baustein an seiner oberen horizontalen Abschlussfläche ein erstes Positionierelement und an seiner unteren horizontalen Anschlussfläche ein zweites Positionierelement, die komplementär zueinander gestaltet sind. Dies bedeutet, dass die betreffenden Positionierelemente zweier Bausteine miteinander in Eingriff gebracht werden können.

Die Bausteine können für eine Gebäudewand ausgelegt sein, die eine tragende Wand des Gebäudes bildet. Für diesen Anwendungsfall können die Bausteine beispielsweise aus Kalksandstein bestehen. Die Dicke dieser Bausteine kann beispielsweise zwischen 10 cm und 40 cm liegen. Die Dicke bezeichnet die Dimension, die quer zur Fläche der Wand ausgerichtet ist.

Alternativ können die Bausteine für eine Gebäudewand ausgelegt sein, die eine nicht-tragende Wand des Gebäudes bildet. Für diesen Anwendungsfall können die Bausteine beispielsweise aus Gips bestehen. Die Dicke der Bausteine kann beispielsweise zwischen 5 cm und 12 cm liegen.

Die Höhe und Breite der Bausteine sollte so bemessen sein, dass sie von einer Person noch gut gehandhabt werden können. Außerdem sollten die Bausteine groß genug sein, dass die Gebäudewand aus einer überschaubaren Zahl von Bausteinen zusammengesetzt werden kann. Die von Breite und Höhe aufgespannte Fläche der Bausteine kann beispielsweise zwischen 0,1 m² und 0,5 m² liegen. Beispielsweise kann der Baustein eine Breite von 50 cm und eine Höhe von 50 cm haben. Die Durchgangskanäle können beispielsweise in einem Abstand von 12,5 cm oder 25 cm parallel zueinander angeordnet sein. Dabei können die Durchgangskanäle zentriert sein, so dass der Abstand vom jeweils äußeren Durchgangskanal zum Rand auf beiden Seiten gleich ist.

Die Temperierungsmodule können so bemessen sein, dass sie die Höhe eines von der Gebäudewand begrenzten Raums im Wesentlichen vollständig überdecken. Die Länge der Einsteckabschnitte kann dazu beispielsweise zwischen 2 m und 3 m liegen.

Allerdings sind derart lange Einsteckabschnitte ungünstig, wenn das Temperierungsmodul in einer Gebäudewand verwendet werden soll, die nachträglich in einen bereits bestehenden Raum eingezogen wird. Die Decke verhindert dann das ungehinderte Einführen der Einsteckabschnitte in die Wandkanäle. Von der Erfindung umfasst ist auch eine Gebäudewand, die nur über einen Teil ihrer Höhe ein Temperierungsmodul aufnimmt. Bezeichnet man die Strecke von der Oberkante des Bodens bis zur Unterkante der Decke als die Höhe der Gebäudewand, so können sich die Einsteckabschnitte des Temperierungsmoduls über 30 % bis 70 %, vorzugsweise 40 % bis 60 % der Höhe der Gebäudewand erstrecken. Das Temperierungsmodul kann im unteren Teil der Gebäudewand angeordnet sein. Die oberen 30 %, vorzugsweise die oberen 40 %, weiter vorzuweisen die oberen 50 % der Gebäudewand können frei von dem Temperierungsmodul sein. Die Einsteckabschnitte des Temperierungsmoduls können eine Länge zwischen 1 m und 1,50 m haben.

Überdeckt das Temperierungsmodul weniger als 50 % der Höhe der Gebäudewand, so kann die Gebäudewand bis zu der betreffenden Höhe aufgebaut werden. Der Raum zwischen dem oberen Abschluss der bis dahin aufgebauten Wand und der Decke reicht aus, um das Temperierungsmodul ungehindert einzuführen. Ist bei anderen Ausführungsformen der Raum oberhalb der Wand weniger hoch, so müssen die Einsteckabschnitte beim Einführen leicht umgebogen werden.

Die Erfindung betrifft außerdem eine Kombination aus einem solchen Temperierungsmodul mit einer Decken-Temperierungseinheit. Eine Decken-Temperierungseinheit ist oberhalb eines Raums angeordnet und häufig in einer abgehängten Decke untergebracht. Es kann der Zufluss oder der Abfluss des Temperierungsmoduls mit der Decken-Temperierungseinheit verbunden sein, so dass die Temperierflüssigkeit erst durch das erfindungsgemäße Temperierungsmodul fließt und dann durch die Decken-Temperierungseinheit oder umgekehrt. Die Verbindungsleitung zwischen dem Temperierungsmodul und der Decken-Temperierungseinheit kann sich durch einen Wandkanal erstrecken, der aus Durchgangskanälen mehrerer Bausteine zusammengesetzt ist. Dies ist insbesondere von Interesse, wenn das Temperierungsmodul sich nicht bis zum oberen Ende der Gebäudewand erstreckt, sondern noch ein Höhenunterschied bis zu dem Decken-Temperierungsmodul überbrückt werden muss.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines erfindungsgemäßen Temperierungsmoduls;
- Fig. 2:: einen Schnitt entlang Linie A-A in Fig. 1;
- Fig. 3:: eine Schnittdarstellung eines in eine Gebäudewand eingesetzten Einsteckabschnitts;
- Fig. 4:: eine erfindungsgemäße Gebäudewand in halbfertigem Zustand;
- Fig. 5:: die Gebäudewand aus Fig. 4 nach Fertigstellung;
- Fig. 6:: verschiedene Ansichten eines Bausteins der Gebäudewand;
- Fig. 7:: einen aus mehreren Bausteinen zusammengesetzten Ausschnitt aus einer Gebäudewand;
- Fig. 8:: einen Querschnitt durch eine erfindungsgemäße Gebäudewand in einem ersten Zustand (A) und einem zweiten Zustand (B) ;
- Fig. 9:: die Ansicht aus Fig. 8 bei einer anderen Ausführungsform der Erfindung ;
- Fig. 10:: eine Ansicht einer erfindungsgemäßen Gebäudewand in einem ersten Zustand (A) und einem zweiten Zustand (B).

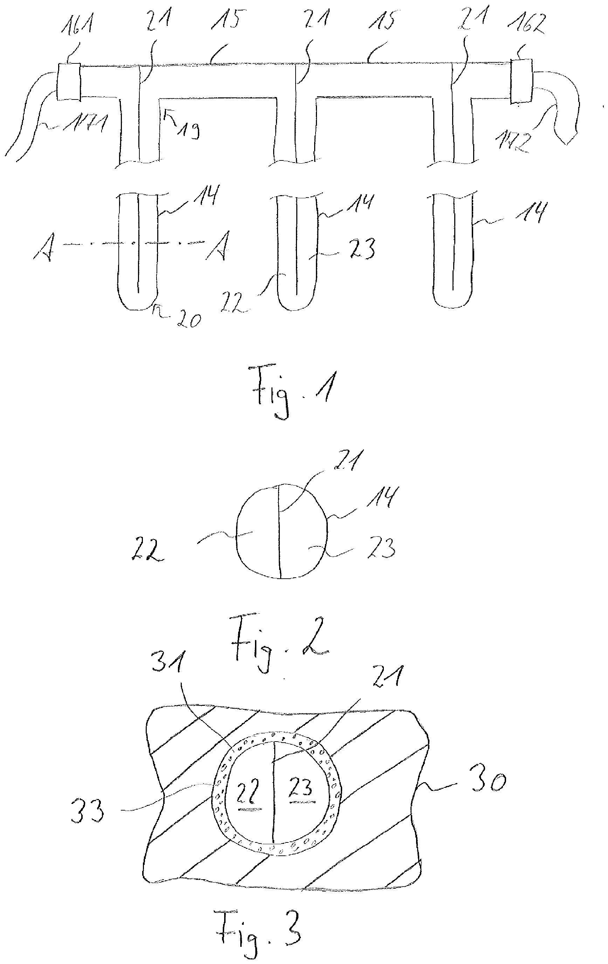

Ein erfindungsgemäßes Temperierungsmodul in Fig. 1 erstreckt sich von einem ersten Anschluss 161 bis zu einem zweiten Anschluss 162. An den Anschluss 161 ist eine Versorgungsleitung 171 angeschlossen, über die dem Temperierungsmodul eine Temperierflüssigkeit zugeführt wird. Die Temperierflüssigkeit fließt durch das Temperierungsmodul bis zu dem zweiten Anschluss 162. An den zweiten Anschluss 162 ist eine zweite Versorgungsleitung 172 angeschlossen, über die die Temperierflüssigkeit abgeführt wird.

Das Temperierungsmodul ist dazu bestimmt, in eine Gebäudewand eingesetzt zu werden, so dass eine Wärmeübertragung zwischen dem Temperierungsmodul und der Gebäudewand stattfindet. Ist die Temperierflüssigkeit kälter als die Gebäudewand, so werden die Gebäudewand und damit der angrenzende Raum gekühlt. Ist die Temperierflüssigkeit wärmer als die Gebäudewand, so werden die Gebäudewand und damit der angrenzende Raum gewärmt. Die Temperierflüssigkeit wird vorzugsweise in einem Kreislauf geführt, der eine geeignete Heizeinrichtung oder Kühleinrichtung umfasst, um die Temperierflüssigkeit auf die gewünschte Temperatur zu bringen.

Das Temperierungsmodul umfasst drei Einsteckabschnitte 14 sowie zwei Verbindungsabschnitte 15, die jeweils zwei benachbarte Einsteckabschnitte miteinander verbinden. Die Einsteckabschnitte 14 erstrecken sich jeweils von einem Versorgungsende 19 bis zu einem Stirnende 20. Die Versorgungsenden 19 zweier benachbarter Einsteckabschnitte 14 sind jeweils über einen Verbindungsabschnitt 15 miteinander verbunden, wobei die Verbindungsabschnitte 15 jeweils den Rücklaufkanal 23 des einen Einsteckabschnitts 14 mit dem Vorlaufkanal 22 des anderen Einsteckabschnitts 14 verbinden. Die Einsteckabschnitte 14 können beispielsweise eine Länge von 2,40 m und einen Durchmesser von 3,2 cm haben. Der Abstand zwischen zwei benachbarten Einsteckabschnitten 14 kann 25 cm sein. Die Verbindungsabschnitte 15 können einen Durchmesser von 3,2 cm haben.

Die Einsteckabschnitte 14 sind im Querschnitt kreisförmig. Im Inneren des Einsteckabschnitts 14 erstreckt sich eine Trennwand 21, die den Einsteckabschnitt in einen Vorlaufkanal 22 und einen Rücklaufkanal 23 unterteilt. Am Versorgungsende 19 ist die Trennwand 21 dicht, so dass es keine Verbindung zwischen dem Vorlaufkanals 23 und dem Rücklaufkanal 23 gibt. Am Stirnende endet die Trennwand 21 mit einem Abstand zur Stirnwand des Einsteckabschnitts 14, so dass dort eine Verbindung zwischen dem Vorlaufkanal 22 und dem Rücklaufkanal 23 besteht.

Die durch den Anschluss 161 in das Temperierungsmodul eintretende Temperierflüssigkeit wird von der Trennwand 21 des ersten Einsteckabschnitts 14 umgelenkt, so dass die Temperierflüssigkeit sich durch den Vorlaufkanal 22 des ersten Einsteckabschnitts 14 nach unten bewegt. Nahe dem Stirnende 20 tritt die Temperierflüssigkeit in den Rücklaufkanal 23 über und fließt zurück in Richtung des Versorgungsendes 21. Ein Verbindungsabschnitt 15 bildet die Verbindung zwischen dem Rücklaufkanal 23 dieses Einsteckabschnitts 14 und dem Vorlaufkanal 22 des nächsten Einsteckabschnitts 14. Auf diese Weise fließt die Temperierflüssigkeit bei allen Einsteckabschnitten 14 vom Versorgungsende 19 zum Stirnende 20 und zurück, bis die Temperierflüssigkeit nach dem letzten Einsteckabschnitt 14 durch den Anschluss 162 wieder aus dem Temperierungsmodul austritt.

Das Temperierungsmodul besteht aus einem thermoplastischen Kunststoff mit guter Diffusionsdichtigkeit wie beispielsweise Polypropylen.

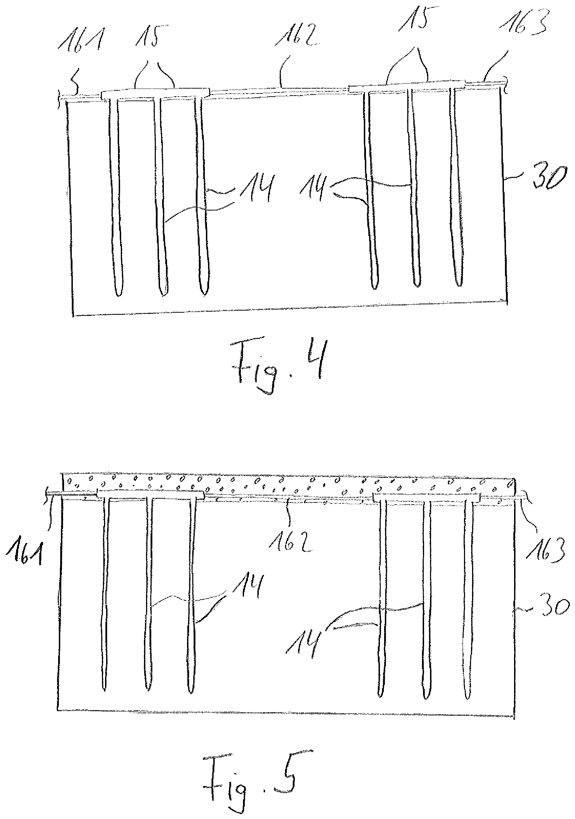

Das Temperierungsmodul ist dazu ausgelegt, in einer Gebäudewand verwendet zu werden, die mit vertikal verlaufenden Wandkanälen versehen ist. Die Fig. 4 zeigt ein Zwischenstadium beim Errichten einer solchen Gebäudewand 30, in dem die Wandkanäle 31 von oben zugänglich sind. Zwei Temperierungsmodule sind mit den Stirnenden 20 der Einsteckabschnitte 14 voran in die Wandkanäle 31 eingeführt. Die Verbindungsabschnitte 15 liegen oben auf der halbfertigen Gebäudewand 30 auf. Die Temperierflüssigkeit wird über eine erste Versorgungsleitung 161 zugeführt. Eine zweite Versorgungsleitung 162 verbindet das erste Temperierungsmodul mit dem zweiten Temperierungsmodul. Über eine dritte Versorgungsleitung 163 wird die Temperierflüssigkeit abgeführt.

Die Wandkanäle 31 haben einen etwas größeren Durchmesser als die Einsteckabschnitte 14, um ein leichtes Einführen der Einsteckabschnitte 14 zu ermöglichen. Nach dem Einführen der Einsteckabschnitte 14 bleibt ein Ringspalt zwischen dem Einsteckabschnitt 14 und dem Wandkanal 31. Der Ringspalt wird, wie Fig. 3 zeigt, mit Quarzsand 33 aufgefüllt, um eine gute Wärmeübertragung von dem Temperierungsmodul auf das Material der Gebäudewand 30 zu erreichen.

Die Gebäudewand 30, die in Fig. 4 in halbfertigem Zustand dargestellt ist, wird gemäß Fig. 5 vervollständigt, indem die Verbindungsabschnitte 15 der Temperierungsmodule mit Beton vergossen werden. Der Beton bildet zugleich die Decke eines an die Gebäudewand 30 angrenzenden Raums. Abgesehen von den Versorgungsleitungen 161 und 163 sind die Temperierungsmodule rundherum von dem Material der Gebäudewand umgeben.

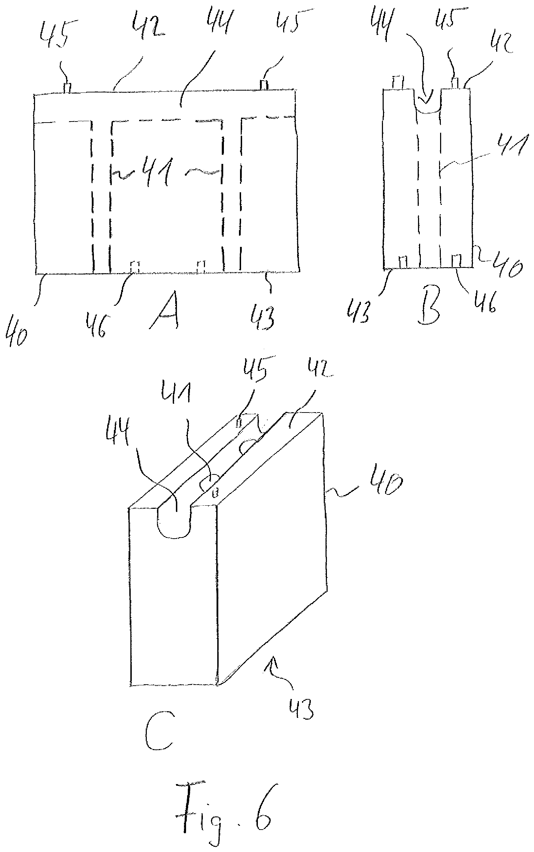

In Fig. 6 ist ein Baustein 40 gezeigt, der zum Errichten einer solchen Gebäudewand verwendet werden kann. Der Baustein 40 ist ein Kalksandstein, der zum Errichten einer tragenden Wand geeignet ist. Der Baustein 40 hat eine Breite von 50 cm und eine Höhe von 40 cm. Die in Ansicht B gezeigte Dicke beträgt 20 cm.

Der Baustein umfasst zwei Durchgangskanäle 41, die sich von der oberen Abschlussfläche 42 bis zur unteren Abschlussfläche 43 erstrecken. Die Kanäle 41 sind in einem Abstand von 25 cm zueinander angeordnet. Die Kanäle 41 haben einen Durchmesser von 4 cm. In der oberen Abschlussfläche 42 ist eine Rinne 44 ausgebildet, die sich über die gesamte Breite des Bausteins 40 erstreckt. Bezogen auf die Dicke des Bausteins 40 ist die Rinne 44 mittig angeordnet. Die Durchgangskanäle 41 sind bezogen auf diese Dimension ebenfalls mittig angeordnet, so dass die Achsen der Durchgangskanäle 41 und der Rinne 44 in einer Ebene liegen. Die Rinne 44 hat einen Durchmesser von 4 cm und eine Tiefe von ebenfalls 4 cm.

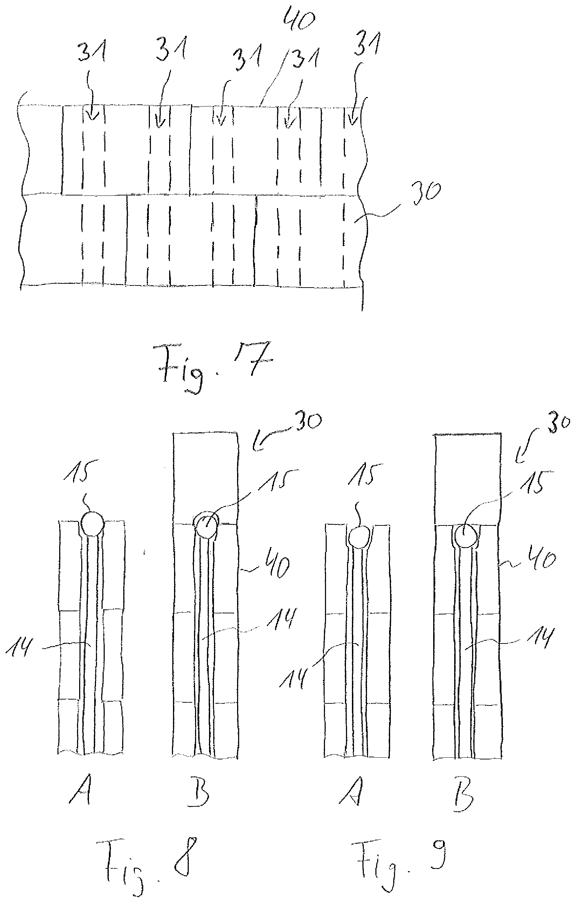

Der Baustein 40 hat auf seiner oberen Abschlussfläche 42 zwei Positionierelemente in Form von Stiften 45. In der unteren Abschlussfläche 43 sind Positionierelemente in Form von Ausnehmungen 46 ausgebildet, die so angeordnet sind, dass ein Eingriff der Stifte 45 erfolgt, wenn übereinander angeordnete Steine um 25 cm, also die halbe Breite der Steine, zueinander versetzt sind. Gemäß Fig. 7 lässt sich auf diese Weise eine Gebäudewand 30 errichten, bei der die Durchgangskanäle 41 der Bausteine 40 durchgehende Wandkanäle 31 bilden. Die Rinnen 44 benachbarter Bausteine 40 fügen sich zu einer durchgehenden horizontalen Rinne zusammen.

Die Wandkanäle 31 haben einen Abstand von 25 cm zueinander, was dem Abstand der Einsteckabschnitte 14 des Temperierungsmoduls entspricht. Die Einsteckabschnitte 14 können also mit den Stirnenden 20 voran in die Wandkanäle 31 eingeführt werden. Sind die Bausteine 40, die die oberste Reihe der halbfertigen Gebäudewand 30 bilden, gemäß Fig. 6 ausgebildet, so werden die Verbindungsabschnitte 15 des Temperierungsmoduls vollständig in der Rinne 44 aufgenommen. Gemäß Fig. 9B können für die nächsthöhere Reihe Bausteine verwendet werden, deren untere Abschlussfläche eben ist. Alternativ ist es gemäß den Figuren 8A, 8B auch möglich, in der oberen Abschlussfläche 42 und der unteren Abschlussfläche 43 jeweils eine Rinne 44 auszubilden, die nur eine Hälfte der Verbindungsabschnitte 44 aufnehmen kann.

In den Bereichen der Gebäudewand 30, in denen nicht die Verbindungsabschnitte 15 aufgenommen werden, können Bausteine ohne die Rinnen 44 verwendet werden. Bei diesen Bausteinen münden die Durchgangskanäle 41 in der oberen Abschlussfläche 42 und der unteren Abschlussfläche 43. Soll zur Vereinfachung der Lagerhaltung lediglich eine Sorte von Bausteinen vorgehalten werden, ist es aber unschädlich, wenn die Wand 30 insgesamt aus Bausteinen 40 aufgebaut wird, die mit Rinnen 44 versehen sind.

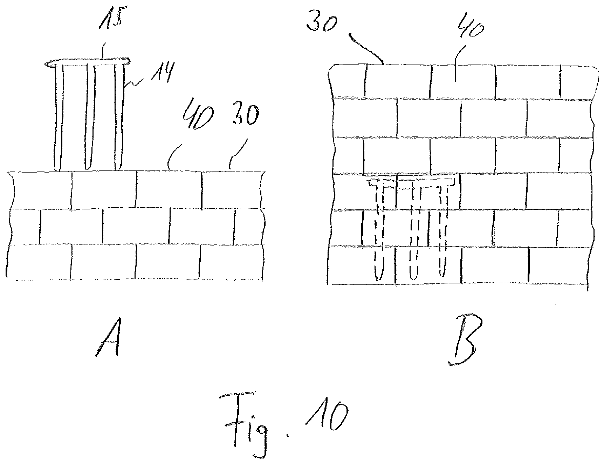

In Fig. 10 ist eine Gebäudewand 30 gezeigt, die nur in ihrer unteren Hälfte mit einem erfindungsgemäßen Temperierungsmodul versehen ist. Die Wand 30 ist eine nicht-tragende Innenwand, die nachträglich in einem bereits bestehenden Gebäude eingezogen wird. Bei den Bausteinen 40 handelt es sich um Bausteine aus Gips, so genannte Gipsdielen. Im Übrigen entsprechen die Bausteine 40 der Darstellung in Fig. 6, wobei die Dicke der Bausteine 40 etwas geringer ausfallen kann. Die Gipsdielen können beispielsweise eine Breite von 50 cm, eine Höhe von 40 cm und eine Dicke von 10 cm haben.

Es werden zunächst die unteren drei Reihen von Bausteinen 40 übereinandergelegt, so dass die Wand eine Höhe von 1,20 m hat. In Abständen von 25 cm erstrecken sich senkrechte Wandkanäle 31 über die gesamte Höhe der Wand. Ein Temperierungsmodul mit in der Länge passenden Einsteckabschnitten 14 wird von oben in die Gebäudewand 30 eingesteckt, so dass die Einsteckabschnitte 14 von den Wandkanäle 31 aufgenommen werden und die Verbindungsabschnitte 15 von der Rinne 44 aufgenommen werden. Bei einer Raumhöhe von 2,40 m kann das Temperierungsmodul gerade in die Gebäudewand eingesteckt werden, ohne dass die Decke stört. Anschließend wird die Gebäudewand 30 gemäß Fig. 10B mit den oberen drei Reihen von Bausteinen 40 vervollständigt.

## Patentansprüche

1. Temperierungsmodul für eine Gebäudewand (30) mit einem ersten Einsteckabschnitt (14), der sich von einem Versorgungsende (19) zu einem Stirnende (20) erstreckt, wobei der erste Einsteckabschnitt (14) einen Vorlaufkanal (22) und einen Rücklaufkanal (23) aufweist und wobei der Vorlaufkanal (22) und der Rücklaufkanal (23) nahe dem Stirnende (20) miteinander verbunden sind, mit einem zu dem ersten Einsteckabschnitt (14) parallel ausgerichteten zweiten Einsteckabschnitt (14), der sich von einem Versorgungsende (19) bis zu einem Stirnende (20) erstreckt, wobei der zweite Einsteckabschnitt (14) einen Vorlaufkanal (22) und einen Rücklaufkanal (23) aufweist und wobei der Vorlaufkanal (22) und der Rücklaufkanal (23) nahe dem Stirnende (20) miteinander verbunden sind, und mit einem Verbindungsabschnitt (15), der sich zwischen dem ersten Einsteckabschnitt (14) und dem zweiten Einsteckabschnitt (14) erstreckt, wobei Verbindungsabschnitt (15) den Rücklaufkanal (23) des ersten Einsteckabschnitts (14) mit dem Vorlaufkanal (22) des zweiten Einsteckabschnitts (14) verbindet, **dadurch gekennzeichnet, dass** der Durchmesser des Verbindungsabschnitts (15) mit dem Durchmesser des Einsteckabschnitts (14) übereinstimmt.

2. Temperierungsmodul nach Anspruch 1, **dadurch gekennzeichnet, dass** die Einsteckabschnitte (14) im Querschnitt an eine kreisförmige Kontur angepasst sind.

3. Temperierungsmodul nach Anspruch 1 oder 2, **dadurch gekennzeichnet, dass** der Vorlaufkanal (22) und Rücklaufkanal (23) von einer gemeinsamen Außenwand umgeben sind und dass im Inneren der Außenwand eine Trennwand (21) angeordnet ist.

4. Temperierungsmodul nach einem der Ansprüche 1 bis 3, **dadurch gekennzeichnet, dass** es mehr als zwei Einsteckabschnitte (14) umfasst, wobei jeweils zwei benachbarte Einsteckabschnitte (14) mit einem Verbindungsabschnitt (15) miteinander verbunden sind, und dass die Achsen der Einsteckabschnitte (14) und die Achsen der Verbindungsabschnitte (15) in einer Ebene angeordnet sind.

5. Gebäudewand, in deren Innerem die Einsteckabschnitte (14) eines Temperierungsmoduls angeordnet sind, **dadurch gekennzeichnet, dass** das Temperierungsmodul nach einem der Ansprüche 1 bis 4 ausgebildet ist.

6. Gebäudewand nach Anspruch 5, **dadurch gekennzeichnet, dass** sie eine Mehrzahl von Bausteinen (40) umfasst, die einen vertikalen Durchgangskanal (41) aufweisen, und dass die Bausteine (40) so angeordnet sind, dass die Durchgangskanäle (41) übereinander angeordneter Bausteine (40) einen Wandkanal (31) bilden.

7. Gebäudewand nach 6, **dadurch gekennzeichnet, dass** sie eine Mehrzahl parallel ausgerichteter Wandkanäle (31) aufweist.

8. Gebäudewand nach einem der Ansprüche 5 bis 7, **dadurch gekennzeichnet, dass** ein Ringspalt zwischen einem Einsteckabschnitt (14) des Temperierungsmoduls und dem Wandkanal (31) mit einem wärmeleitenden Material (33) aufgefüllt ist.

9. Gebäudewand nach einem der Ansprüche 5 bis 8, **dadurch gekennzeichnet, dass** sie einen Baustein (40) aufweist, dessen horizontale Abschlussfläche (42) mit einer Rinne (44) versehen ist.

10. Gebäudewand nach Anspruch 9, **dadurch gekennzeichnet, dass** eine Mehrzahl von Bausteinen (40) eine durchgehende horizontale Rinne (44) bildet.

11. Gebäudewand nach einem der Ansprüche 5 bis 10, **dadurch gekennzeichnet, dass** ein Positionierelement (45) eines ersten Bausteins (40) in ein Positionierelement (46) eines zweiten Bausteins (40) eingreift, so dass die Durchgangskanäle (41) der Bausteine (40) miteinander fluchten.

12. Gebäudewand nach einem der Ansprüche 5 bis 11, **dadurch gekennzeichnet, dass** die Einsteckabschnitte (14) sich über 30% bis 70%, vorzugsweise über 40% bis 60% der Höhe der Gebäudewand (30) erstrecken.

## Claims

1. Temperature-control module for a building wall (30) having a first plug-in portion (14) which extends from a supply end (19) to a front end (20), wherein the first plug-in portion (14) has a feed duct (22) and a return duct (23) and wherein the feed duct (22) and the return duct (23) are connected to one another close to the front end (20), having a second plug-in portion (14) which is oriented parallel to the first plug-in portion (14) and which extends from a supply end (19) to a front end (20), wherein the second plug-in portion (14) has a feed duct (22) and a return duct (23) and wherein the feed duct (22) and the return duct (23) are connected to one another close to the front end (20), and having a connecting portion (15) which extends between the first plug-in portion (14) and the second plug-in portion (14), wherein the connecting portion (15) connects the return duct (23) of the first plug-in portion (14) to the feed duct (22) of the second plug-in portion (14), **characterized in that** the diameter of the connecting portion (15) corresponds to the diameter of the plug-in portion (14).

2. Temperature-control module according to Claim 1, **characterized in that**, in cross section, the plug-in portions (14) are adapted to a circular contour.

3. Temperature-control module according to Claim 1 or 2, **characterized in that** the feed duct (22) and return duct (23) are surrounded by a common outer wall, and **in that** a partition wall (21) is arranged in the interior of the outer wall.

4. Temperature-control module according to one of Claims 1 to 3, **characterized in that** it comprises more than two plug-in portions (14), wherein in each case two adjacent plug-in portions (14) are connected to one another by a connecting portion (15), and **in that** the axes of the plug-in portions (14) and the axes of the connecting portions (15) are arranged in one plane.

5. Building wall, in the interior of which the plug-in portions (14) of a temperature-control module are arranged, **characterized in that** the temperature-control module is designed according to one of Claims 1 to 4.

6. Building wall according to Claim 5, **characterized in that** it comprises a plurality of building blocks (40) which have a vertical through-duct (41), and **in that** the building blocks (40) are arranged in such a way that the through-ducts (41) of building blocks (40) arranged above one another form a wall duct (31).

7. Building wall according to Claim 6, **characterized in that** it has a plurality of wall ducts (31) oriented in parallel.

8. Building wall according to one of Claims 5 to 7, **characterized in that** an annular gap between a plug-in portion (14) of the temperature-control module and the wall duct (31) is filled with a heat-conducting material (33).

9. Building wall according to one of Claims 5 to 8, **characterized in that** it has a building block (40) whose horizontal end face (42) is provided with a channel (44).

10. Building wall according to Claim 9, **characterized in that** a plurality of building blocks (40) form a continuous horizontal channel (44).

11. Building wall according to one of Claims 5 to 10, **characterized in that** a positioning element (45) of a first building block (40) engages in a positioning element (46) of a second building block (40), with the result that the through-ducts (41) of the building blocks (40) are aligned with one another.

12. Building wall according to one of Claims 5 to 11, **characterized in that** the plug-in portions (14) extend over 30% to 70%, preferably over 40% to 60%, of the height of the building wall (30).

## Revendications

1. Module de contrôle de température pour un mur de bâtiment (30), comprenant une première portion à insérer (14), qui s'étend d'une extrémité d'alimentation (19) à une extrémité frontale (20), la première portion à insérer (14) possédant un canal d'aller (22) et un canal de retour (23) et le canal d'aller (22) et le canal de retour (23) étant reliés l'un à l'autre à proximité de l'extrémité frontale (20), comprenant une deuxième portion à insérer (14) orientée parallèlement à la première portion à insérer (14), laquelle s'étend d'une extrémité d'alimentation (19) jusqu'à une extrémité frontale (20), la deuxième portion à insérer (14) possédant un canal d'aller (22) et un canal de retour (23) et le canal d'aller (22) et le canal de retour (23) étant reliés l'un à l'autre à proximité de l'extrémité frontale (20), et comprenant une portion de liaison (15) qui s'étend entre la première portion à insérer (14) et la deuxième portion à insérer (14), la portion de liaison (15) reliant le canal de retour (23) de la première portion à insérer (14) au canal d'aller (22) de la deuxième portion à insérer (14), **caractérisé en ce que** le diamètre de la portion de liaison (15) coïncide avec le diamètre de la portion à insérer (14).

2. Module de contrôle de température selon la revendication 1, **caractérisé en ce que** les portions à insérer (14) en section transversale sont adaptées à un contour de forme circulaire.

3. Module de contrôle de température selon la revendication 1 ou 2, **caractérisé en ce que** le canal d'aller (22) et le canal de retour (23) sont entourés par une paroi extérieure commune et **en ce qu'**une paroi de séparation (21) est disposée à l'intérieur de la paroi extérieure.

4. Module de contrôle de température selon l'une des revendications 1 à 3, **caractérisé en ce qu'**il comporte plus de deux portions à insérer (14), deux portions à insérer (14) respectivement voisines étant reliées entre elles par une portion de liaison (15), et **en ce que** les axes des portions à insérer (14) et les axes des portions de liaison (15) sont disposés dans un plan.

5. Mur de bâtiment, dans lequel sont disposées les portions à insérer (14) d'un module de contrôle de température, **caractérisé en ce que** le module de contrôle de température est configuré selon l'une des revendications 1 à 4.

6. Mur de bâtiment selon la revendication 5, **caractérisé en ce qu'**il comprend une pluralité de blocs de construction (40), qui possèdent un canal de passage vertical (41), et **en ce que** les blocs de construction (40) sont disposés de telle sorte que les canaux de passage (41) des blocs de construction (40) disposés les uns au-dessus des autres forment un canal de mur (31) .

7. Mur de bâtiment selon la revendication 6, **caractérisé en ce qu'**il possède plusieurs canaux de mur (31) orientés en parallèle.

8. Mur de bâtiment selon l'une des revendications 5 à 7, **caractérisé en ce qu'**un interstice annulaire entre une portion à insérer (14) du module de contrôle de température et le canal de mur (31) est rempli d'un matériau thermoconducteur (33).

9. Mur de bâtiment selon l'une des revendications 5 à 8, **caractérisé en ce qu'**il possède un bloc de construction (40) dont la surface de terminaison horizontale (42) est pourvue d'une rigole (44) .

10. Mur de bâtiment selon la revendication 9, **caractérisé en ce qu'**une pluralité de blocs de construction (40) forment une rigole (44) horizontale continue.

11. Mur de bâtiment selon l'une des revendications 5 à 10, **caractérisé en ce qu'**un élément de positionnement (45) d'un premier bloc de construction (40) vient en prise dans un élément de positionnement (46) d'un deuxième bloc de construction (40), de sorte que les canaux de passage (41) des blocs de construction (40) sont en alignement les uns par rapport aux autres.

12. Mur de bâtiment selon l'une des revendications 5 à 11, **caractérisé en ce que** les portions à insérer (14) s'étendent sur 30 % à 70 %, de préférence sur 40 % à 60 % de la hauteur du mur de bâtiment (30).
